# EUROPEAN PATENT SPECIFICATION

(11) **EP 1 286 817 B1**
(45) Date of publication and mention of the grant of the patent: **22.02.2006**
(21) Application number: 01945196.2
(22) Date of filing: 25.05.2001
(51) Int. Cl.: B29C 49/42, B29C 49/64, B29C 49/06

(54) **APPARATUS AND METHOD FOR HANDLING AND COOLING PLASTIC PREFORMS**
VORRICHTUNG UND VERFAHREN ZUM HANDHABEN UND ZUR KÜHLUNG VON KUNSTSTOFFVORFORMLINGEN
APPAREIL ET PROCEDE PERMETTANT DE MANIPULER ET DE REFROIDIR DES PREFORMES DE PLASTIQUE

(30) Priority: 06.06.2000 IT PN000036
(43) Date of publication of application: 05.03.2003
(73) Proprietor: SIPA S.p.A., I-31029 Vittorio Veneto (IT)
(72) Inventor: CORAN, Massimo, I-31027 Spresiano (IT); ZOPPAS, Matteo, I-33074 Fontanafredda (IT)
(74) Representative: Giugni, Valter
(86) International application number: PCT/EP2001/006022
(87) International publication number: WO 2001/094096

## Description

The present invention refers to a high-output, high-productivity plant for the production of plastic items, i.e. so-called "preforms", and in particular the present invention applies in a preferred manner to machines adapted for moulding at the same time a plurality of such so-called "preforms", that are intended for processing by blow moulding into appropriate final containers, especially plastic bottles.

The present invention represents a simplified variant of the invention described in the **European Patent Application no. 00981317.1 (European Patent No. 1 252 007 published on 30.10.2002).**

A prior art document according to the preamble of claim 1 is known from US-A-4 140 464.

As a result, the description of the background of the invention, the state of the art and the problems connected therewith is set forth exhaustively in the above cited Italian patent application and shall not be repeated here for reasons of conciseness.

The solution proposed in the above cited patent application has actually turned out as being extremely effective in the production of preforms only, but not in the production of also finished blow-moulded containers. In other words, the solution disclosed in said patent application is characterized by a high capacity in cooling the preforms before the release thereof, and this is exactly the constraining element in a preform production plant.

Such a kind of solution can most obviously be used also in a so-called single-stage or single-step production plant, but in this case it should be duly taken into account that the preforms are of course required to be cooled down to a far lesser extent, since they must subsequently be again conditioned, i.e. brought up to a temperature of approx. 105°C for blow moulding.

It therefore can be readily appreciated that such a solution appears to be rather exuberant if seen against the result which is actually aimed at. If the fact is then considered that such a solution turns ultimately out as being considerably complicated under all viewpoints and, therefore, quite cost-intensive and demanding, it can further be readily appreciated that it is not capable of allowing for an optimisation of a single-stage plant, which would rather receive a much greater advantage from the implementation of a less complicated solution, even if the latter would prove less adapted to cool down in a very short time the preforms as they come out of the injection mould.

The need also arises for another main drawback to be considered in this connection, i.e. the fact that the solution described in the above cited patent application is not generally adapted to be installed or integrated in modem single-stage plants owing to a lack of space, and this circumstance is such as to therefore be prejudicial to the utilization thereof in such kind of plants, even if its poor advantageous character in such particular application is left out of consideration.

Known from the disclosure in US RE. 33,237 is a plant for the production of generally hollow items of plastic material, but substantially of injection-moulded preforms, as this is explained in the first lines of the related description. Disclosed in this patent publication is in particular a construction solution that consists in providing a plate provided with appropriate cooling cups for respective preforms, and substantially characterized in that the two half-moulds that produce such preforms are alternately opened and moved away from each other to allow for the removal of the same preforms therefrom. The extent to which said half-moulds are moved away from each other is such as to allow for said plate with all its cooling cups to be directly introduced between said two half-moulds when these are fully opened apart.

This enables the preforms to be transferred directly from the injection mould to said cup-carrying plate, thereby cutting down on the operation time required and simplifying the construction of the plant itself.

This solution, however, can be only adopted in connection with plants that allow for such a kind of preform cooling plate to be introduced between the injection half-moulds, while it most clearly cannot be used in those plants which feature such construction and operation restraints as to practically exclude such a possibility.

It is therefore desirable, and it is actually a main purpose of the present invention, to provide a plant and a respective process which are adapted to implement and carry out a preform cooling-down phase under a sensible reduction in the length of the original cycle time, prove to be particularly efficient and advantageous when used in connection with a single-stage plant, are capable of doing away with the above described drawbacks, are reliable and capable of being easily implemented using readily available and, therefore, cost-effective materials and techniques.

Such an aim of the present invention, along with further features thereof, is reached in a plant that is made and operates as recited in the appended claims.

The present invention may take the form of a preferred, although not sole embodiment such as the one that is described in detail and illustrated below by way of non-limiting example with reference to the accompanying drawings, in which:
- Figures 1 and 1a are a vertical projection view and a plan view according to the A - A section, respectively, of a plant according to the present invention, in a definite phase of operation thereof;
- Figures 2, 2a ... and so on through to Figures 11 and 11a are corresponding vertical-projection views and plan views according to the same section of the same plant, in successive different phases of operation thereof;
- Figure 12 is a more detailed top view of a component part of the plant according to the present invention;
- Figure 13 is a more detailed top view of a second component part of the plant according to the present invention.

With reference to the above listed Figures, a plant according to the present invention comprises:
- a load-bearing structure 1,
- a collection and translation element 2;
- a plurality of receptacles 10 provided in said collection and translation element 2;
- a cooling structure 3, provided with a plurality of cooling cups 6 adapted to accommodate respective preforms for pre-determined periods of time and then to release them on to other preform handling means.

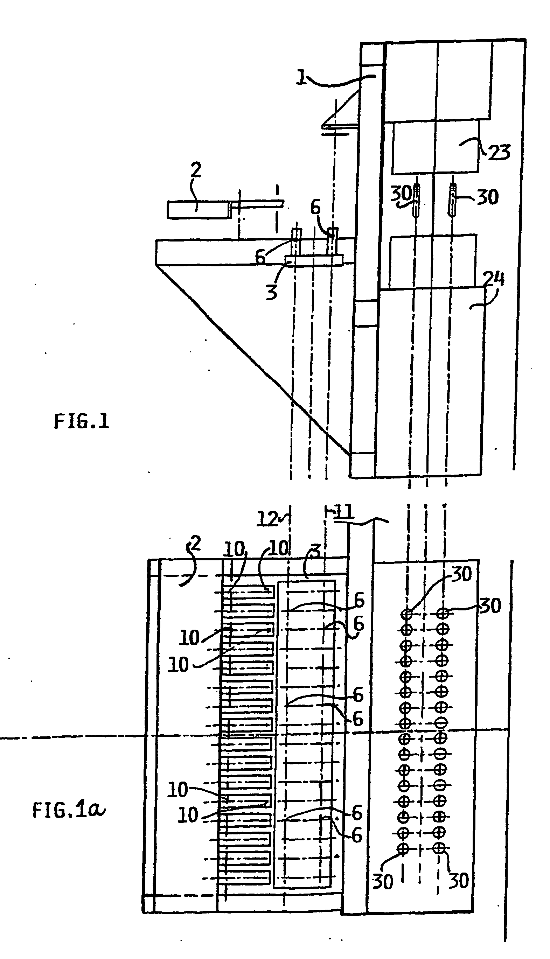

For greater representation simplicity, in the Figures 1 through to 12a said receptacles 10 and said cups 6 are symbolically represented only by the intersecting points of the axes determining the position thereof.

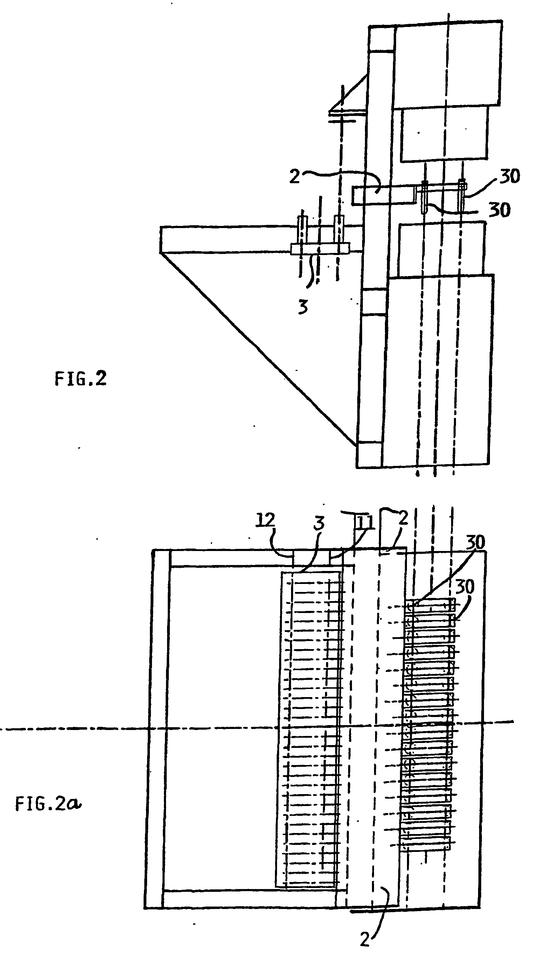

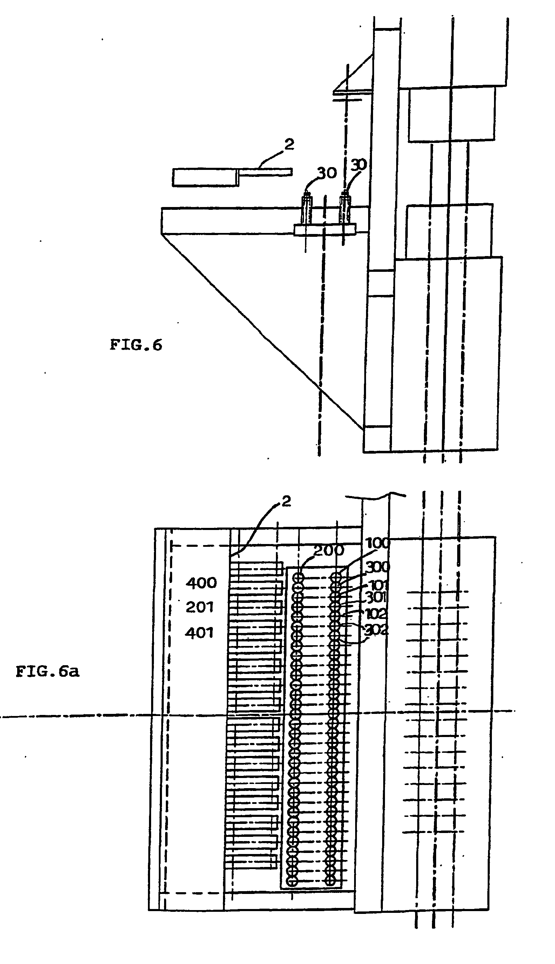

Said collection and translation element 2 is provided with means (not shown in the Figures) which make it capable of performing a horizontal motion that carries it alternately:
- from a position inside the gap created between two opened horizontal half-moulds 23, 24 (see Figure 2)
- to a position situated outside such a gap and above said cooling structure 3 in such a manner as to enable the preforms 30 that are retained in said receptacle means to fall by gravity down into respective ones of said cups 6, in a manner and with means that will be described in greater detail further on,
- to a third external all-out position (see Figure 1 and Figures 6 through to 11), in which said element 2 is further displaced into such a position as to leave the space above said cooling structure completely free,
- and, vice-versa, from this external all-out position again to the initial position between said two half-moulds.

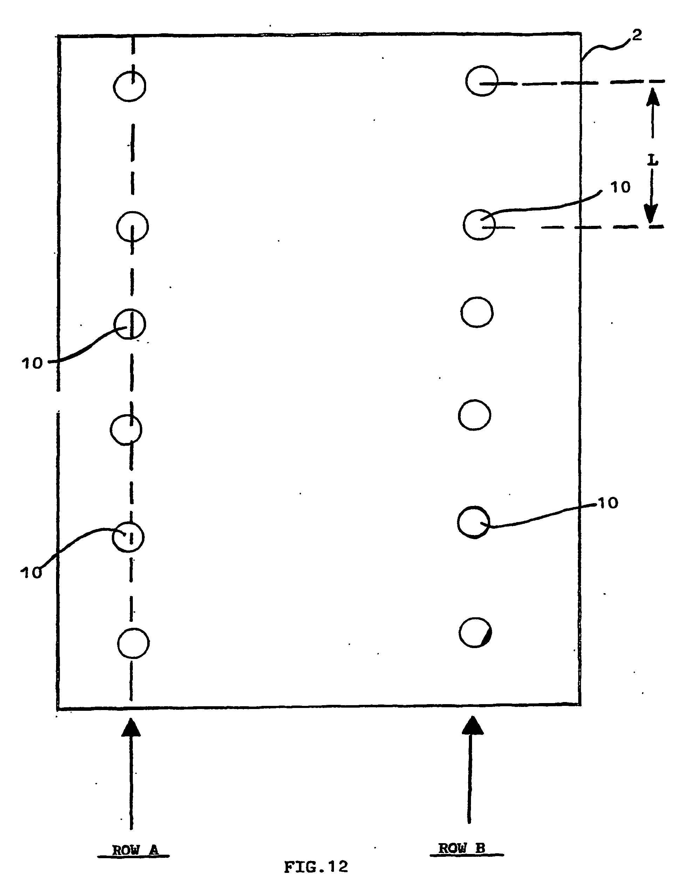

Said receptacles 10 provided in said collection element 2 are preferably distributed according to the following geometric pattern: with reference to Figure 12, which is a more detailed top view of said collection and translation element 2, said receptacles 10 are arranged along two rows A and B, in which they are aligned and equally spaced from each other.

In order to be able to better develop the continuation of this description, the overall geometry defined by the totality of said receptacles 10 in said collection element 2 will be defined as "distribution pattern", while the preforms produced and at the same time introduced in said receptacles, and therefore arranged in the same so defined distribution pattern, are referred to as "cluster".

In an advantageous manner, and to the purpose of making the most out of the available space, the two rows A and B include the highest possible number of receptacles 10 as allowed by the length of the rows themselves, owing to reasons that will explained in a greater detail further on.

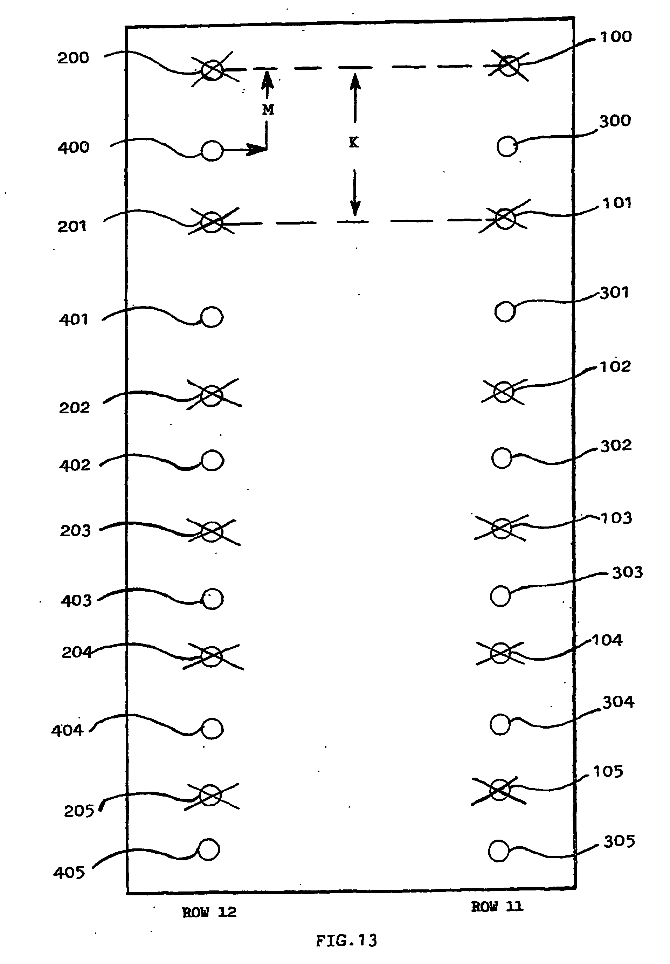

With reference to Figure 13, said cooling structure 3 comprises in turn two distinct and parallel rows 11, 12 of cups, in which the cups of both rows are generally arranged according to two distinct distribution patterns, each one of which is equal to the distribution pattern of said receptacles 10.

In other words, a first distribution pattern comprises both the cups identified by the numerals 100 through to 105 in the row 11, and the cups identified by the numerals 200 through to 205 in the row 12.

Similarly, a second distribution pattern comprises both the cups identified by the numerals 300 through to 305 in the row 11, and the cups identified by the numerals 400 through to 405 in the row 12.

The row of receptacles in the element 2 can therefore be arranged selectively, using per sè known means, above the cups comprised in one of the two just above described and illustrated distinct distribution patterns.

This most obviously enables the element 2 to load with respective preforms, and for successive cycles, all of the cups 6 arranged on said cooling structure 3, while each time unloading a successive cluster of preforms on to a different distribution pattern of cups by simply displacing and arranging in the appropriate position said cooling structure 3, in such a manner as to ensure that each distribution pattern of cooling cups 6 is enabled to alternately arrange itself under the distribution pattern provided in said collection element 2.

Since the task of said receptacles is to:
- intercept the preforms released from the upper half-mould 23,
- collect said preforms in an orderly manner and orientate them vertically, i.e. with their neck portion or opening turned upwards,
- transfer them above said cooling structure 3, and
- finally let them fall into the respective cup, with the use of such means and techniques as generally known in the art,

said receptacles and, more generally, said element 2 are provided with appropriate means that are adapted to selectively retain the single clusters of preforms falling down from above, and to release them downwards.

Also well-known to all those skilled in the art is the fact that, owing to reasons that shall not be recalled here due to them being so widely known, the centre distance between the preforms of a same cluster during injection moulding is quite different from and, in particular, quite smaller than the centre distance between the same preforms before and during the blow-moulding step.

The existence is further well-known of particular devices and operating modalities, which are generally known under the term of "pitch change" or "variable-pitch" facility and are adapted to widen the centre distance between preforms in order to reach the new pitch as required by the blow-moulding operation.

It therefore becomes advantageous for the possibility of implementing both the accelerated cooling of the preforms removed at the same time from the injection mould and the above cited pitch-change operation to be brought together into a single plant and related process.

Such a result can be reached in a plant as illustrated in particular in Figures 12 and 13, in which the collection element 2 contains two rows A and B of preform accommodating receptacles, in which the contiguous elements in the same row are separated from each other by a distance "L" that is the optimum one for the injection moulding of the preforms, whereas the cooling structure 3 comprises said two rows 11 and 12 of cups, in which however, in the row 11, the cups identified by the numerals 100 through to 105 are arranged alternately to the cups 300 through 305; similarly, in the row 12, the cups identified by the numerals 200 through to 205 are arranged alternately to the cups 400 through 405.

It will also be readily appreciated that, in order to really reach the desired result, said distance "L" between contiguous receptacles in a same row will be the optimum distance required in view of being able to produce preforms without any waste of unused space, whereas the distance "K" between the cups arranged in the same distribution pattern and contained in the same row, eg. the ones indicated at 100 through to 105, will be the optimum distance required as the desired spacing between the preforms in the blow-moulding phase, while the distance "M" between two adjacent cups, eg. between the cup 200 and the cup 400, and therefore belonging to the two different distribution patterns, can be determined partly arbitrarily, with the sole obvious constraint of keeping it sufficiently smaller than "K".

Readily appreciated can on the other hand be also the fact that the means adapted to implement the above cited "pitch change" facility, i.e. the distribution of the preforms of a same cluster to the distinct distribution patterns on the cooling structure 3, are known to those skilled in the art, so that they shall not be described here.

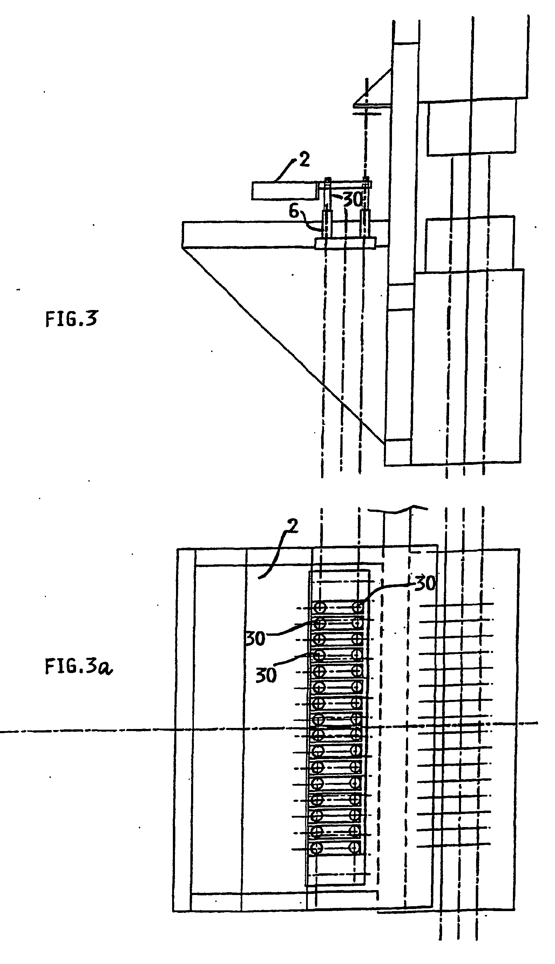

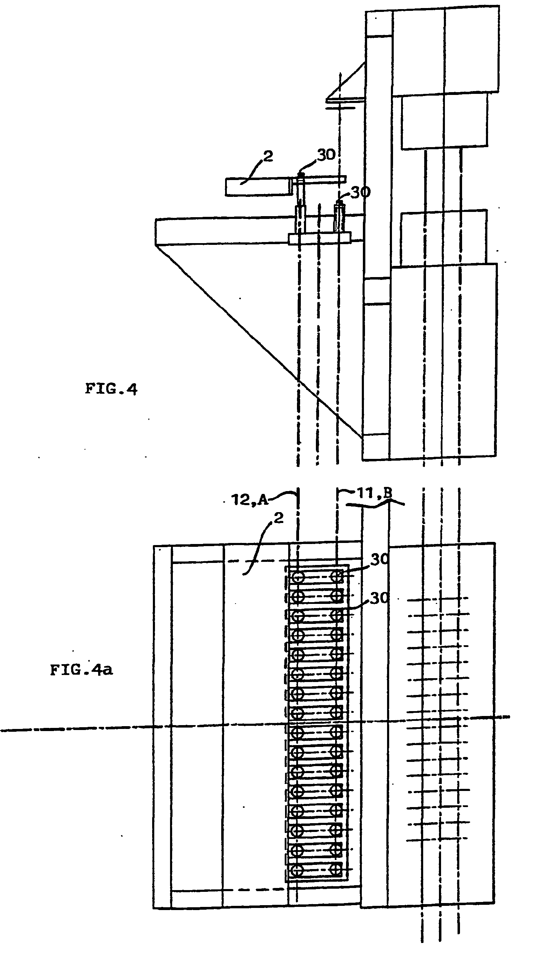

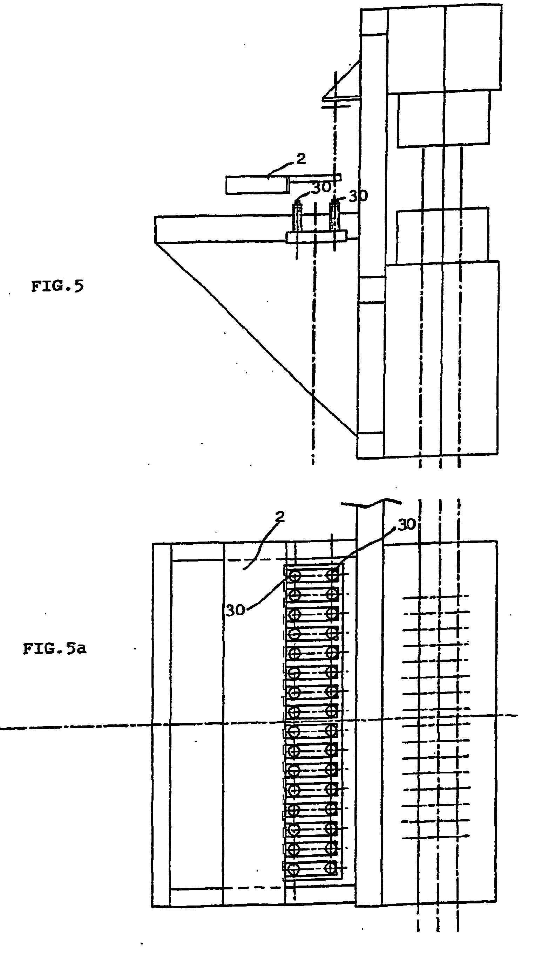

The way in which the above described and illustrated plant operates will at this point be fully clear. Anyway, it can be summarized as follows:
- in an initial phase of the process, the preforms 30 of a same sub-cluster are moulded in the half-moulds 23 and 24, which are subsequently opened apart, while the receptacles 10 of the element 2 are empty and the latter is still located outside said half-moulds 23, 24 (see Figures 1, 1a);
- in a subsequent phase, the element 2 is inserted between said two half-moulds 23 and 24 in such a position as to enable the cluster of preforms, i.e. the preforms that are released from the upper half-mould at the same time, to fall down exactly into a corresponding number of receptacles 10 provided in the element 2 (Figures 2 and 2a);
- in the next phase, the element 2 is transferred above said cooling structure 3 in such a manner as to enable the preforms of a same cluster, as previously loaded in the respective receptacles of the element 2, to get disposed above the cups of the first distribution pattern, i.e. from 100 through to 105 and from 200 through to 205, while at the same time undergoing the pitch change process to vary the centre distance therebetween (Figures 3 and 3a);
- upon conclusion of the above mentioned phase, for reasons that will be explained in greater detail further on, only the preforms in the row B are allowed to fall down into respective cups 6 in the row 11 of the cooling structure 3 (Figures 4 and 4a) and, with reference to Figure 13, into the cups identified with the numerals 100, 101, 102, 103, 104, 105;
- in the following phase, and after a pre-determined period of time, only the preforms in the row A are in turn allowed to fall down into the respective cups 6 in the corresponding row 12 on the cooling structure 3 (Figures 5, 5a) and, with reference to Figure 13, into the cups identified with the numerals 200, 201, 202, 203, 204, 205;
- subsequently (Figures 6 and 6a), the collection element 2 is withdrawn from its position above the cooling structure 3, which is shown with all of its cups filled with the respective preforms (also those identified with the numerals 300, 301 ... 305, 400, 401 ... 405, which have not been filled in the immediately preceding phases, so that they should be intended as having been loaded in a previous cycle).

In the meanwhile, the preforms that have already been inserted in the cups from 300 through to 305 and 400 through to 405 are regularly cooled down to the desired temperature value, and therefore for a pre-determined length of time, after which the same preforms are picked up in sequence and, therefore, in the same order in which they had been inserted in the two distribution patterns comprised in the structure 3 of the given example.

Each cluster of preforms is then sent to the blow-moulding process using generally known means and methods.

In a preferred manner, these comprise conveying means 20, such as for instance a sliding conveyor belt, provided with appropriate pick-up means duly aligned and spaced at a distance "K" from each other so as to be able to exactly engage the preforms contained in alternate receptacles comprised in a single row of the structure 3.

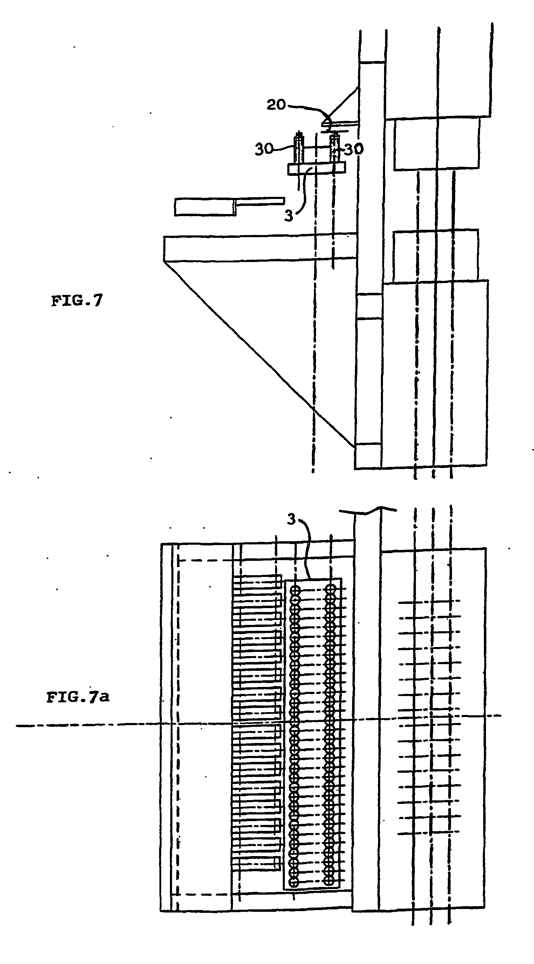

Upon expiration of the period of time provided to allow, say, the preforms that had already been loaded in the respective cups 300, 301 ... 305 in a previous cycle to properly cool down, said cooling structure 3 is raised with generally known means, so that the preforms in said cups are capable of being seized by respective pick-up means (not shown in the Figures, since well-known in the art) and carried away from said conveyor 20 (Figures 7, 7a).

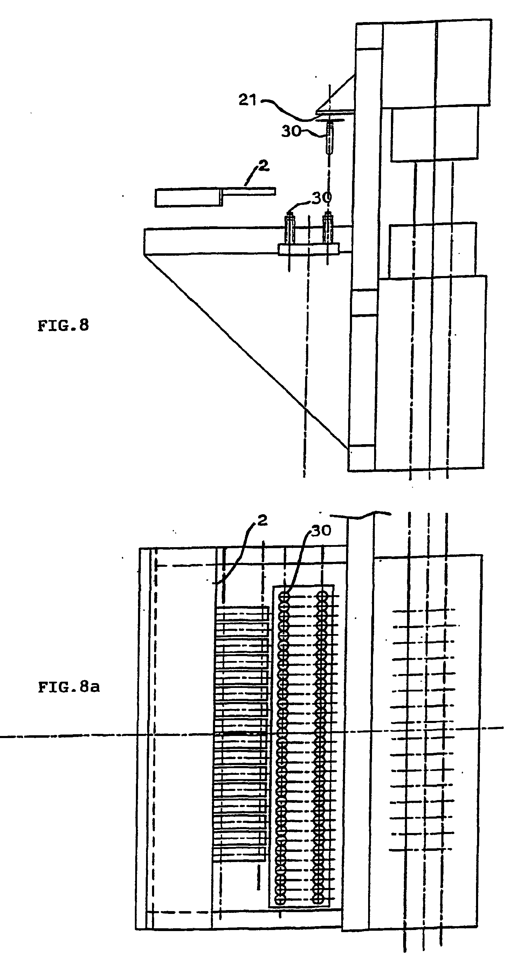

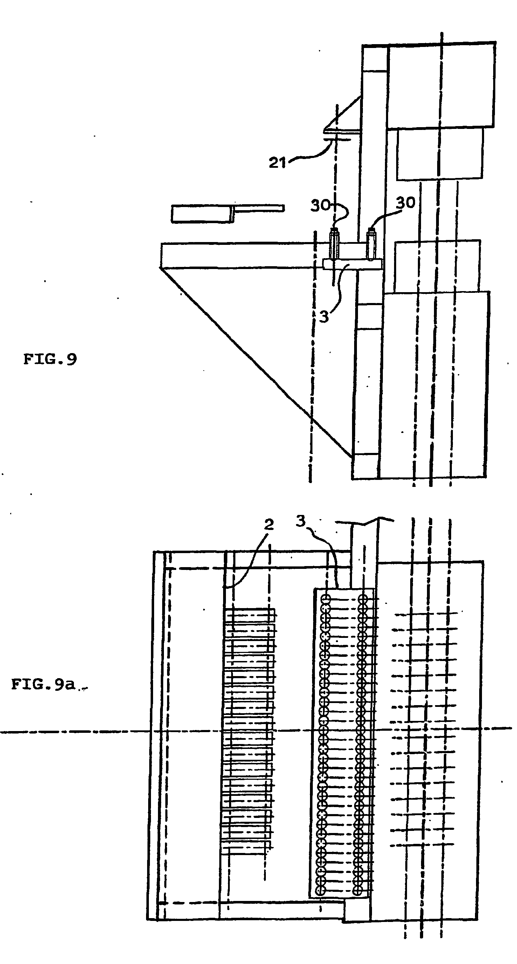

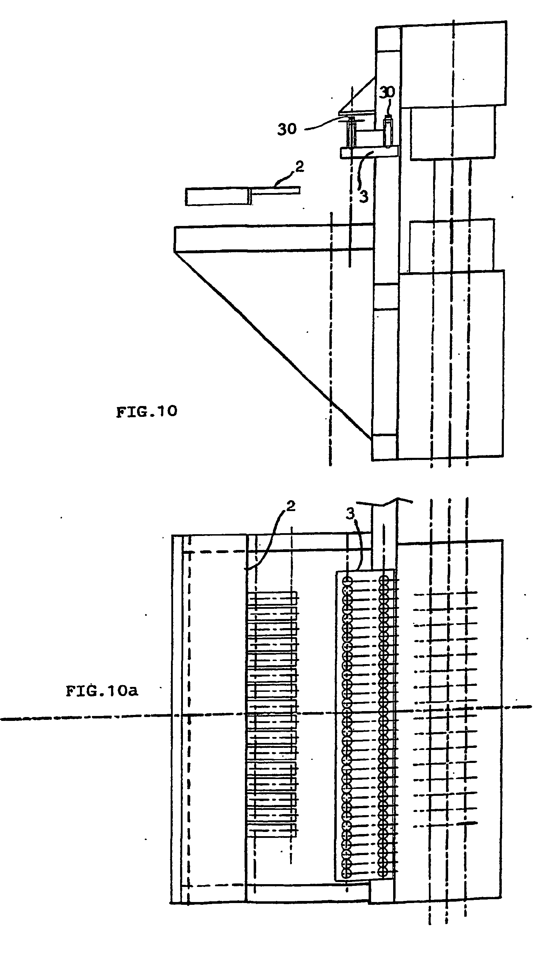

Then, in order to load also the preforms 400 through to 405, as previously inserted in the respective cups, the structure 3 is:
- lowered (see Figures 8, 8a);
- translated sidewards by an extent which is equal to the distance between the rows 11 and 12, so that the row 12 gets now aligned with the conveying means 20 (Figures 9, 9a);
- and finally raised again, so that also the preforms 400 through to 405 are seized by respective pick-up means and conveyed to the next processing station (Figures 10, 10a).

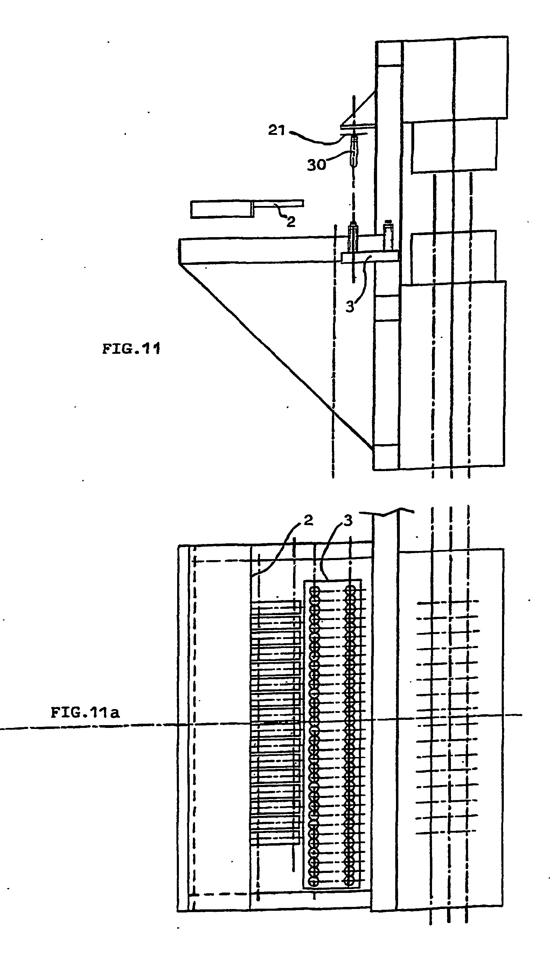

The structure 3 is then lowered again (Figures 11, 11a), so as to enable the working cycle to be restarted and repeated as illustrated in Figure 1.

It should however be noticed that, during the subsequent phases, the preforms of a same cluster are inserted in the cups 300 through to 305 and 400 through to 405, which have just been cleared by the respective preforms, wherein said subsequent phases are used to appropriately cool down the preforms in the just loaded cups 100 through to 105 and 200 through to 205.

In order to be able to load said cups 300 through to 305 and 400 through to 405, considering that the cups between the two distinct distribution patterns are misaligned with respect to each other by a distance "M" as described above, the need arises for said cooling structure 3 to displace in the direction of the alignment of the rows 11 and 12 by an equal extent so that the preforms of the second loading are enabled to get correctly inserted in the respective cups of said second distribution pattern. To this purpose, means as generally known in the art are provided to impart a translatory, selectively actuatable motion to said structure.

Following said displacement, said element 2 is caused to move back into its initial position so as to allow for the loading of the cups belonging to the first distribution pattern

As those skilled in the art will certainly have been able to notice, the cooling structure 3 substantially undergoes three types of motions, and namely:
- an upward motion to enable the preforms, after the cooling thereof, to be seized by the respective pick-up means of the conveyor belt 20;
- a sideward motion to successively bring a first row 11 and then a second row 12 into alignment with said pick-up means which are in turn provided in an aligned arrangement;
- a displacement, in a direction parallel to the rows, by such an extent K as to enable in a first phase the cups in the first distribution pattern and in a subsequent phase the cups in the second distribution pattern to be loaded with respective preforms.

It will have certainly also been noticed that the circumstance of letting first the preforms of a row and then the preforms of the second row, belonging to a same distribution pattern, be loaded on to respective pick-up means, involves that different cooling times should be provided for each row, if the cups are filled at the same time.

However, since no cooling unevenness and, therefore, temperature unevenness is acceptable among the preforms in a continuous production environment and, in particular, in a single-stage plant, the need ensues for the cooling times to be levelled off. This is obtained by loading the row 11 with hot preforms at a certain instant, and then loading the cups of the row 12 with the respective preforms only after a pre-determined period of time has elapsed therefrom.

Such a delay can be obtained with various means that are generally known in the art, so that they shall not be dealt with here any further.

Those skilled in the art will therefore be able to readily appreciate that the described solution effectively enables a plurality of preforms, as appropriately gathered into a number of distinct distribution patterns, to be accommodated in a very limited space duly fitted for cooling down the same preforms. In fact, if the number of distribution patterns available on the cooling structure 3 altogether is indicated as n, and if the total duration of the cooling-down phase of the preforms is for technical reasons pre-set at T, it will be obvious that it is possible for a release of preforms to be obtained every period T/n.

It is therefore to such a same period T/n that the time, ie. duration, of the elementary cycle including preform injection, solidification and removal from the mould can be actually brought down to; and, therefore, the preform cooling-down time can be suitably reduced, this being allowed for by the possibility for preforms to be knocked out when still sufficiently hot for the subsequent blow-moulding phase, as compared with the solution and the constraints of the revolving-turret plant described in the afore cited patent EP-A-1 252 007.

## Claims

1. Apparatus for handling and cooling down preforms produced in an injection mould, as well as transferring said preforms to a subsequent work station for further processing said preforms, **characterised in that** it comprises:
- a collection element (2), arranged horizontally, provided with an upper surface in which there are arranged a plurality of receptacles (10) arranged in two rows and organised according to a first definite distribution pattern and adapted to accommodate a corresponding plurality or cluster of preforms being ejected from an injection mould,
- a cooling element (3), provided with a plurality of cups (6), each cup being adapted to accommodate and cool down a respective preform, said cups being arranged into a plurality of further distribution patterns arranged in a manner to prevent the respective cups (6) of respective clusters from interfering with each other, wherein said collection element (2) is adapted:
- to move alternately with a rectilinear translatory motion between a first position, which is situated between two injection half-moulds (23, 24) in the opened condition, and a second position that lies substantially above said cooling element (3), and
- to further move to a third position which is arranged further away from said first and second positions,
- wherein said cooling element (3) is adapted to selectively perform the following three types of displacement motions:
- a first displacement, in a direction parallel to the rows, by such an extent (K) as to, in a first phase, load the preforms in the cups according to a first distribution pattern and, in a subsequent phase, to load the preforms in the cups according to a second distribution pattern;
- a second displacement in a transverse direction with respect to said first displacement to alternately bring the a first row (11) and then the a second row (12) into alignment with appropriate pick-up means (20) which are aligned with said rows;
- a third upward displacement to enable the preforms, as inserted in respective cups to be seized by respective pick-up means.

2. Apparatus according to claim 1, **characterised in that** it further comprises a device that is associated to said collection element (2) and is adapted to selectively modify said first distribution pattern of said receptacles so as to make it identical to said further distribution pattern, and to restore said first distribution pattern into its original form.

3. Apparatus according to claim 2, **characterised in that** each one of said distribution patterns provided in said cooling element consists of a plurality of arrangements, preferably parallel rows (11, 12), of aligned cups, in which each one of said arrangement comprises an equal number of said cups.

4. Apparatus according to claim 3, **characterised in that** said cups, associated to distinct distribution patterns and arranged along a same row, are arranged alternately with respect to each other.

5. Method for cooling plastic preforms carried out in an apparatus according to any combination of the preceding claims, wherein after injection moulding of a cluster of preforms (30) in appropriate closed half-moulds (23, 24) said method comprises following phases:
- opening the half-moulds
- insertion of a collection element (2) between said two half-moulds and release of said preforms from the upper half-mould, so that a the cluster of preforms, which are released at the same time from said upper half-mould, are able to fall down exactly into a corresponding number of receptacles (10) provided in said element (2);
- transfer of said element (2) to a position above a cooling structure (3) provided with a plurality of cooling cups (6) arranged in two rows, in such a manner as to enable said preforms to be carried above the cups according to a first distribution pattern;
- release of said preforms so as to allow the preforms of one row to fall down after the preforms of the second row into respective cups arranged according to said first distribution pattern,
- latching of a different cluster of preform, inserted in cups of said cooling structure (3) that are arranged according to a further distribution pattern, on to a conveying means (20) provided with appropriate, aligned pick-up means, by carrying out a vertical displacement of said cooling structure (3).

## Patentansprüche

1. Vorrichtung zum Handhaben und Abkühlen von in einer Spritzgießform hergestellten Vorformlingen sowie zum Überführen der Vorformlinge zu einer folgenden Bearbeitungsslation zur weiteren Bearbeitung der Vorformlinge, **dadurch gekennzeichnet, dass** sie umfasst:
ein Sammelelement (2), das horizontal angeordnet und mit einer oberen Fläche versehen ist, in der eine Vielzahl von Aufnahmen (10) angeordnet sind, die in zwei Reihen angeordnet und entsprechend einem ersten festen Verteilungsmuster gruppiert und so eingerichtet sind, dass sie eine entsprechende Vielzahl oder Gruppen von Vorformlingen aufnehmen, die aus einer Spritzgießform ausgestoßen werden,
ein Kühlelement (3), das mit einer Vielzahl von Schalen (6) versehen ist, wobei jede Schale so eingerichtet ist, dass sie einen entsprechenden Vorformling aufnimmt und abkühlt, und die Schalen in einer Vielzahl weiterer Verteilungsmuster angeordnet sind, die so angeordnet sind, dass verhindert wird, dass die entsprechenden Schalen (6) entsprechender Gruppen einander behindern, wobei das Sammelelement (2) so eingerichtet ist, dass es
sich abwechselnd mit einer gradlinigen Verschiebebewegung zwischen einer ersten Position, die sich zwischen zwei Spritzgieß-Halbformen (23, 24) im offenen Zustand befindet, und einer zweiten Position bewegt, die im Wesentlichen oberhalb des Kühlelementes (3) liegt, und
sich weiter an eine dritte Position bewegt, die weiter entfernt von der ersten und der zweiten Position angeordnet ist,
wobei das Kühlelement (3) so eingerichtet ist, dass es selektiv die folgenden drei Arten von Verschiebebewegungen durchführt:
eine erste Verschiebung in einer Richtung parallel zu den Reihen, um eine solche Strecke (K), dass in einer ersten Phase die Vorformlinge entsprechend einem ersten Verteilungsmuster in die Schalen gefüllt werden und in einer anschließenden Phase die Vorformlinge entsprechend einem zweiten Verteilungsmuster in die Schalen gefüllt werden;
eine zweite Verschiebung in eine Querrichtung in Bezug auf die erste Verschiebung, um abwechselnd die erste Reihe (11) und dann die zweite Reihe (12) auf entsprechende Aufnehmeinrichtungen (20) auszurichten, die auf die Reihen ausgerichtet sind;
eine dritte Verschiebung nach oben, so dass die Vorformlinge, die in entsprechende Schalen eingeführt sind, von entsprechenden Aufnehmeinrichtungen ergriffen werden können.

2. Vorrichtung nach Anspruch 1, **dadurch gekennzeichnet, dass** sie des Weiteren eine Einrichtung umfasst die mit dem Sammelelement (2) verbunden und so eingerichtet ist, dass sie selektiv das erste Verteilungsmuster der Aufnahmen so modifiziert, dass es identisch mit dem weiteren Verteilungsmuster wird, und das erste Verteilungsmuster wieder in seine ursprüngliche Form zurückversetzt.

3. Vorrichtung nach Anspruch 2, **dadurch gekennzeichnet, dass** jedes der Verteilungsmuster, die in dem Kühlelement vorhanden sind, aus einer Vielzahl von Anordnungen, vorzugsweise parallelen Reihen (11,12) ausgerichteter Schalen besteht, wobei jede der Anordnungen eine gleiche Anzahl der Schalen umfasst

4. Vorrichtung nach Anspruch 3, **dadurch gekennzeichnet, dass** die Schalen, die mit individuellen Verteilungsmustern verbunden und in der gleichen Reihe angeordnet sind, abwechselnd zueinander angeordnet sind.

5. Verfahren zum Kühlen von Kunststoffvorformlingen, das in einer Vorrichtung gemäß einer beliebigen Kombination der vorliegenden Ansprüche ausgeführt wird, wobei nach Spritzgießen einer Gruppe von Vorformlingen (30) in geeigneten, geschlossenen Halbformen (23, 24) das Verfahren die folgenden Phasen umfasst:
Öffnen der Halbformen
Einführen eines Sammelelementes (2) zwischen die zwei Halbformen und Lösen der Vorformlinge von der oberen Halbform, so dass eine Gruppe von Vorformlingen, die gleichzeitig von der oberen Halbform gelöst werden, genau in eine entsprechende Anzahl von Aufnahmen (10) nach unten fallen können, die in dem Element (2) vorhanden sind;
Überführen des Elementes (2) an eine Position oberhalb einer Kühlstruktur (3), die mit einer Vielzahl von Kühlschalen (6) versehen ist, die in zwei Reihen so angeordnet sind, dass die Vorformlinge entsprechend einem ersten Verteilungsmuster über die Schalen transportiert werden können;
Freigeben der Vorformlinge, so dass die Vorformlinge in einer Reihe nach den Vorformlingen der zweiten Reihe in entsprechende Schalen nach unten fallen können, die entsprechend dem ersten Verteilungsmuster angeordnet sind,
Arretieren einer anderen Gruppe von Vorformlingen, die in Schalen der Kühlstruktur (3) eingesetzt sind, die entsprechend einem weiteren Verteilungsmuster angeordnet sind, auf einer Fördereinrichtung (20), die mit geeigneten ausgerichteten Aufnehmeinrichtungen versehen sind, indem eine vertikale Verschiebung der Kühlstruktur (3) ausgeführt wird.

## Revendications

1. Appareil permettant de manipuler et de refroidir des préformés produits dans un moule à injection, ainsi que de transférer lesdits préformés à un poste de travail ultérieur afin de traiter à nouveau lesdits préformés, **caractérisé en ce qu'**il comprend :
- un élément de collecte (2), disposé horizontalement, muni d'une surface supérieure sur laquelle est disposée une pluralité de récipients (10) disposés sur deux rangées et organisés selon un premier modèle précis de distribution et adaptés pour recevoir une pluralité correspondante de groupes de préformés éjectés d'un moule à injection,
- un élément de refroidissement (3) muni d'une pluralité de godets (6), chaque godet étant adapté pour recevoir et refroidir un préformé respectif, lesdits godets étant disposés en une pluralité de modèles de distribution supplémentaires disposés de manière à empêcher les godets (6) respectifs de groupes respectifs d'interférer les uns avec les autres, dans lequel ledit élément de collecte (2) est adapté :
- pour se déplacer alternativement avec un mouvement rectiligne de translation entre une première position située entre deux demi-moules à injection (23, 24) à l'état ouvert et une deuxième position située sensiblement au-dessus dudit élément de refroidissement (3), et
- pour se déplacer ensuite vers une troisième position située au-delà desdites première et deuxième positions,
- dans lequel ledit élément de refroidissement (3) est adapté pour effectuer de manière sélective les trois types suivants de mouvements de déplacement :
- un premier déplacement, dans une direction parallèle aux rangées, sur une distance (K) afin de charger les préformés, dans une première phase, dans les godets selon un premier modèle de distribution et de charger les préformés, dans une phase ultérieure, dans les godets selon un second modèle de distribution ;
- un deuxième déplacement dans une direction transversale par rapport audit premier déplacement afin d'aligner alternativement ladite première rangée (11) puis ladite seconde rangée (12) avec des moyens de chargement appropriés (20) qui sont alignés avec lesdites rangées ;
- un troisième déplacement vers le haut afin que les préformés insérés dans les godets respectifs soient collectés par les moyens de chargement respectifs.

2. Appareil selon la revendication 1, **caractérisé en ce qu'**il comprend en outre un dispositif associé audit élément de collecte (2) et adapté pour modifier de manière sélective ledit premier modèle de distribution desdits récipients de façon à le rendre identique audit modèle de distribution supplémentaire et à redonner audit premier modèle de distribution sa forme d'origine.

3. Appareil selon la revendication 2, **caractérisé en ce que** chacun desdits modèles de distribution fourni dans ledit élément de refroidissement est composé d'une pluralité de dispositions, de préférence des rangées parallèles (11, 12), de godets alignés, dans laquelle chacune desdites dispositions comprend un nombre égal desdits godets.

4. Appareil selon la revendication 3, **caractérisé en ce que** lesdits godets, associés à des modèles de distribution distincts et disposés sur une même rangée, sont disposés en alternance les uns par rapport aux autres.

5. Procédé permettant refroidir des préformés de plastique au moyen d'un appareil selon une combinaison quelconque des revendications précédentes, dans lequel, après le moulage par injection d'un groupe de préformés (30) dans des demi-moules fermés appropriés (23, 24), ledit procédé comprend les phases suivantes :
- l'ouverture des demi-moules
- l'insertion d'un élément de collecte (2) entre lesdits deux demi-moules et la libération desdits préformés à partir du demi-moule supérieur, de sorte qu'un groupe de préformés, libérés simultanément à partir dudit demi-moule supérieur, puisse tomber exactement dans un nombre correspondant de récipients (10) fournis dans ledit élément (2);
- le transfert dudit élément (2) jusqu'à une position située au-dessus d'une structure de refroidissement (3) munie d'une pluralité de godets de refroidissement (6) disposés sur deux rangées, de façon à permettre auxdits préformés d'être transportés au-dessus des godets selon un premier modèle de distribution ;
- la libération desdits préformés de façon à permettre aux préformés d'une rangée de tomber après les préformés de la seconde rangée dans des godets respectifs disposés selon ledit premier modèle de distribution,
- la collecte d'un groupe différent de préformés, insérés dans les godets de ladite structure de refroidissement (3) qui sont disposés selon un autre modèle de distribution, sur des moyens de transport (20) munis de moyens de chargement appropriés et alignés, par le biais d'un déplacement vertical de ladite structure de refroidissement (3).
